# EUROPEAN PATENT APPLICATION

(11) **EP 4 682 070 A1**
(43) Date of publication of application: **21.01.2026**
(21) Application number: 25189544.7
(22) Date of filing: 15.07.2025
(51) Int. Cl.: B65D 6/24, B65D 6/00, B65D 21/02, B65D 75/32, B65D 8/00, B65D 77/20, B65B 7/28, B65B 25/00, B65D 77/24, B65D 81/32, B65D 85/36, B65D 85/60, B31B 50/59, B32B 27/08, B32B 27/10, B32B 27/36, B31F 1/00

(54) **PACKAGING FOR FOOD PRODUCTS**

(30) Priority: 17.07.2024 IT 202400016507
(71) Applicant: SOREMARTEC S.A., 2633 Senningerberg (LU)
(72) Inventor: STINCHELLI, Carola, 10136 Torino (IT); SANNAZZARO, Roberto, 15028 Quattordio (Alessandria) (IT); AVOGADRO, Paola, 12055 Diano d'Alba (Cuneo) (IT)
(74) Representative: Rambelli, Paolo

(57) **Abstract**

Packaging for products, such as food products, comprising a first (2) and a second (3) half-shell shaped like a cap with a respective flange surrounding the mouth profile and connected to each other at the respective flanges, at least one of said half-shells being closed by a respective sealing foil (6, 7); said first (2) and second (3) half-shell and said respective sealing foil (6, 7) being optionally provided with respective appendicular formations (20, 30) for opening the package located at said flanges, characterized in that:
- said first (2) and second (3) half-shells are both formed by a shaped sheet of paper material,
- the aforementioned at least one sealing foil (6, 7) consists of a laminate comprising at least one paper main layer (66; 66°; 76), a heat-sealable surface coating (68; 78; 79) applied on the face of the foil facing the respective half-shell, preferably polyethylene or high density polyethylene) and a heat-sealable or ultrasonic weldable surface coating (62; 71), applied on the face of the foil facing the other half-shell.

## Description

This invention relates to a package, particularly for food products, of the type comprising a first and a second half-shell shaped like a cap, with a respective flange surrounding the mouth profile, in which at least one of the half-shells, preferably both half-shells, is closed by a sealing foil to confine a food product and/or an accessory or toy item inside it.

EP 919488 B1 describes a package of the aforementioned type, formed by two half-shells of thermoformable plastic material, suitable for contact with food, with a respective sealing foil, also of plastic material.

The purpose of this invention is to provide a package of the aforementioned type that is compostable and/or biodegradable and/or recyclable and capable of providing adequate hermetic sealing characteristics of the food products contained in the package, obtaining a shelf-life of the packaged product corresponding to that of products in conventional plastic packaging.

Another aim achieved by the invention is to provide a package that has a printed pattern on the outer surface of the half-shells that, after the half-shells are formed, deforms only minimally, unlike what happens after thermoforming with conventional plastic half-shells

### Summary of the invention

These purposes are achieved thanks to a package, as defined in the following claims, which constitute an integral and integral part of this description.

In particular, the main feature of the invention consists in that both half-shells, as well as the respective sealing foils, are made of a mainly paper material, i.e. with a cellulose fiber content such that the packaging is recyclable in paper according to the test methods recognized in the specific sector (e.g. CEPI method, Paper based Recyclability Guidelines, etc.).

Further characteristics and advantages of this invention will become evident from the following detailed description, provided with reference to the following drawings and examples, which are not intended to be limiting.

### Brief description of the drawings

In the attached drawings:
- Figure 1 is an exploded perspective general view of a package of the type that is the object of the present invention, as illustrated in the prior art known from EP 919488 B1;
- Figure 2 is a sectional view of a half-shell containing a food product with its sealing foil;
- Figures 3(a), (b) and (c) are sectional views illustrating exemplary embodiments of the layered structure of the sealing foil which is, preferably, associated with the half-shell containing the food product;
- Figure 4 is a sectional view of a half-shell containing a toy with its sealing foil;
- Figures 5 (a) and (b) are sectional views illustrating two exemplary embodiments of the layered structure of the sealing foil which is, preferably, associated with the half-shell of Figure 4 containing the toy;
- Figure 6 is an exploded sectional view of the package;
- Figure 6A is a schematic representation of possible distribution patterns of the ultrasonic weldable lacquer;
- Figure 7(a), (b) and (c) illustrates the half-shells equipped with a sealing foil that is only partially peelable from the respective flange,
- Figure 8 illustrates an exemplary multilayer structure for the sheet of paper material, forming the half-shells, and
- Figure 9 is a partially exploded perspective view of a package according to the invention with an associated take up or spreading tool.

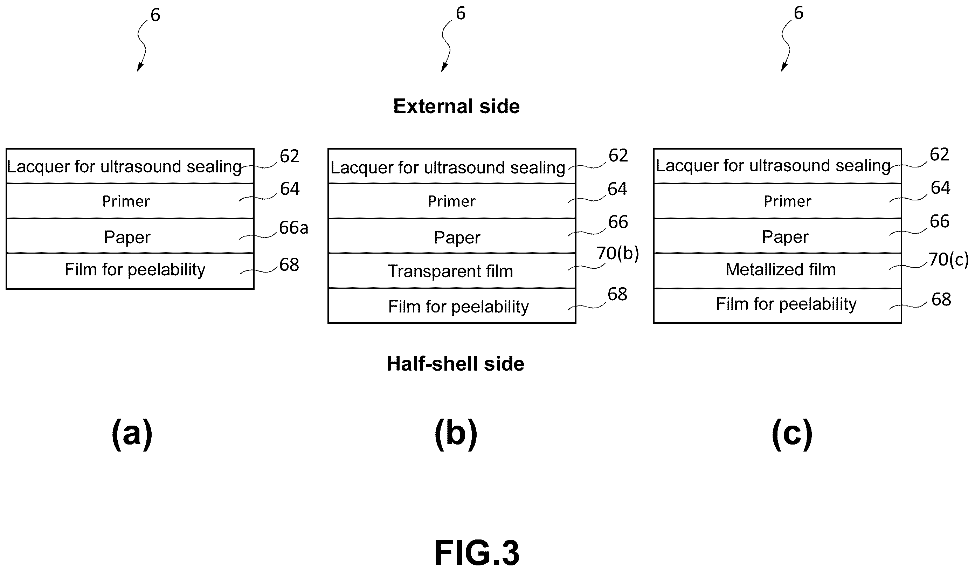

Figures 3, 5 and 8 illustrate multilayer structures with an indication of the nature of the materials preferably used for these layers and their alternation. These indications are to be understood as purely exemplary, even if preferred; the general ranges of numerical values of the aforementioned characteristics and alternative materials are shown in the following description with reference to the aforementioned layers.

### Detailed description of the invention

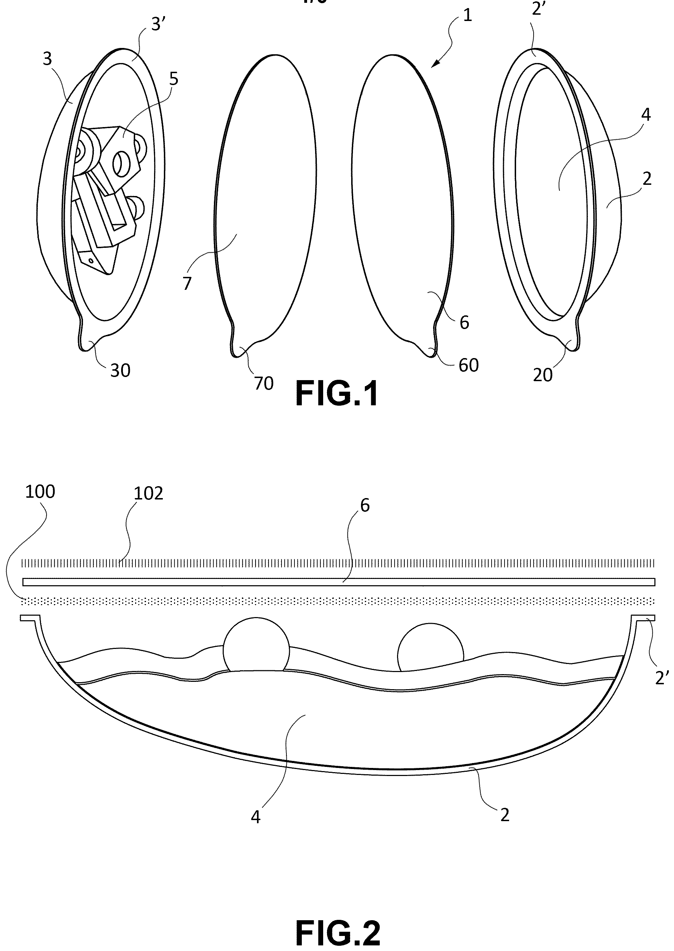

In the example of the embodiment in Figure 1, the package 1 comprises two half-shells 2 and 3 that can receive inside, respectively, an edible food mass 4 and an accessory 5, such as a toy, intended to act as a "surprise". Both half-shells are provided, in correspondence with the respective mouth parts of flanged edges or flanges 2', 3' that allow the application, when closing the half-shells 2 and 3 after filling them, of corresponding sealing foils 6 and 7. However, the case in which a single sealing foil 6 is present, associated with the half-shell containing the food mass, falls within the scope of the invention.

The two half-shells, filled and closed, are then connected to each other in a frontal matching condition, for example through a fixing action carried out at the peripheral parts of the sealing foils 6 and 7 that extend facing the flanges 2' and 3'.

Following the connection of the two half-shells, the package has a substantially ovoid configuration; however, it is understood that this configuration is not binding, since other configurations are naturally possible, such as a heart-shaped configuration.

Preferably, at least one of the sealing foils 6 and 7, or both such foils, has an appendicular formation, or tab 60 or 70 respectively, which can be superimposed on a corresponding appendicular formation 20 or 30 respectively of the respective half-shell, to facilitate the opening of the package.

According to one characteristic of the invention, the aforementioned sealing foil is made up of a laminate comprising at least one main paper layer, a coating of heat-sealable material, applied as a surface coating on the face of the foil facing the respective half-shell, such as a polyethylene or high-density polyethylene film, and a heat-sealable or ultrasonic-sealable coating, applied as a surface coating on the face of the foil facing the other half-shell, with the possible interposition of intermediate layers between the main paper layer and the heat-sealable or ultrasonic-sealable coating, such as, for example, a layer of primer.

In the context of this invention, layers of primer are used, preferably of a biological, natural nature, applied to the paper layer, with the function of reducing the porosity of the paper, facilitating the application of subsequent layers and facilitating recyclability.

The reference to the paper layer as the main layer is to be understood as referring to the fact that the latter is the layer of greater grammage of the laminate that contributes to the grammage of the laminate for at least 50% by weight, preferably in an amount equal to at least 70% and even more preferably from 80 to 85% by weight, up to 95% by weight.

Figure 3 (a), (b) and (c) illustrates three preferred multilayer structures for the sealing foil 6 intended to be applied to the half-shell 2 for the containment of the food product. This sealing foil must achieve barrier characteristics, particularly to humidity and/or oxygen, hermetic characteristics following its sealing to the corresponding half-shell, as well as peelability characteristics for the opening of this part of the container. Furthermore, it is preferable that this foil can be ultrasonically welded to the sealing foil of the other half-shell.

In the exemplary and preferred embodiments of Figure 3, the sealing foil 6 comprises:
- a surface coating 62 obtained by applying an ultrasonic weldable lacquer, applied with different coating patterns, depending on the desired recyclability characteristics, for example with 100%, 50%, 25% coverage or coverage values between these intermediates. The ultrasonic weldable lacquer, common to the three embodiments of Figure 3, can, for example, be deposited by applying a mixture of water and/or solvent, resin or polymeric components, of which mainly ethylene vinyl acetate (EVA); the weldable lacquer coating is typically applied with a grammage of 3-4 g/m ²;
- a coating layer 64, underlying the coating 62, acting as a primer, aimed at reducing the absorption of the lacquer coating 62 in the underlying paper layer, improving the peelability of the foil and the recyclability of the material.

The use of the coating or primer layer 64 is preferred, but not binding. It is preferably made up of biological substances ("biobased"), preferably polysaccharides, and can be obtained by applying, for example, a mixture of polysaccharides and water; the grammage of the primer layer is of the order of about 2 g/m²;
- a main paper layer, indicated with 66, in figures 3(b) and (c) and with 66a in figure 3(a).

The term paper layer means a layer formed by a material comprising or consisting essentially of cellulose fibers; the material may include any additives of the type conventionally used in the production of paper or cardboard; the material may also include optional functional additives to achieve barrier effects to gases and liquids.

This layer can typically have a grammage from 80 to 110 - 120 g/m².

In the embodiment of Figure 3(a), the paper layer, indicated with 66a, is a layer of paper with intrinsic barrier properties, particularly to water vapor, which makes special coatings or additional laminations unnecessary.

In Figure 3(b) and (c), the paper layer 66 is a conventional paper layer, for example with a preferred grammage of 90 g/m².

68 indicates a surface coating, preferably formed by a film applied by lamination, on the face of the foil facing the half-shell to which it is joined, suitable for obtaining a seal, preferably of the thermal type, with the flange of the half-shell to which the sealing foil is applied and with peelability characteristics.

For example, this surface layer may consist of a polyethylene or high density polyethylene film, for example with a thickness of 6 to 10 microns, preferably about 8 microns.

In the embodiments of Figure 3(b) and (c), 70(b) and 70(c), respectively, indicate a lamination layer with moisture barrier properties, for example of polypropylene, or polyethylene, which can be transparent or optionally metallized, for example with a thickness from 8 to 12 microns, preferably about 8 microns. The aforementioned layers 70(b) and 70(c) are not present in the structure of Figure 3(a), since layer 66(a) is a layer of paper with intrinsic barrier properties.

In Figure 2, the reference number 100 is used to indicate the sealing area, preferably by means of heat sealing, between the sealing foil 6 and the flange 2' of the half-shell 2. 102 indicates the sealing area, preferably by ultrasound sealing, which is made to connect the two parts of the package, along a peripheral annular area of the sealing foil 6.

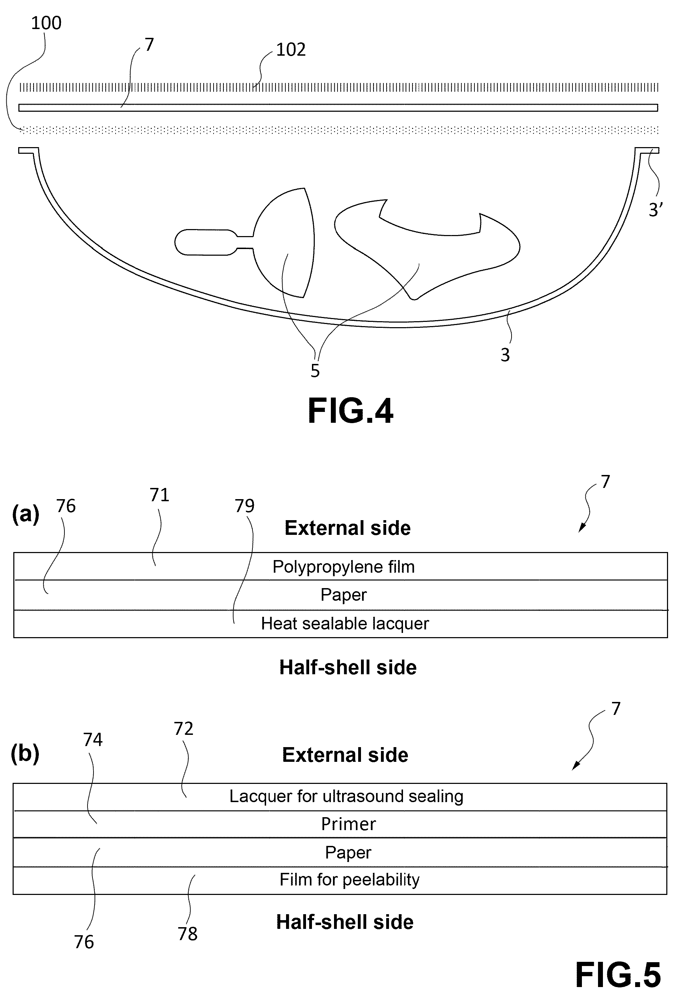

Figure 4 illustrates, in section, the half-shell 3 intended to contain an accessory 5, with the respective sealing foil 7 that is welded, along the annular region 100, to the flange 3' of the half-shell 3.

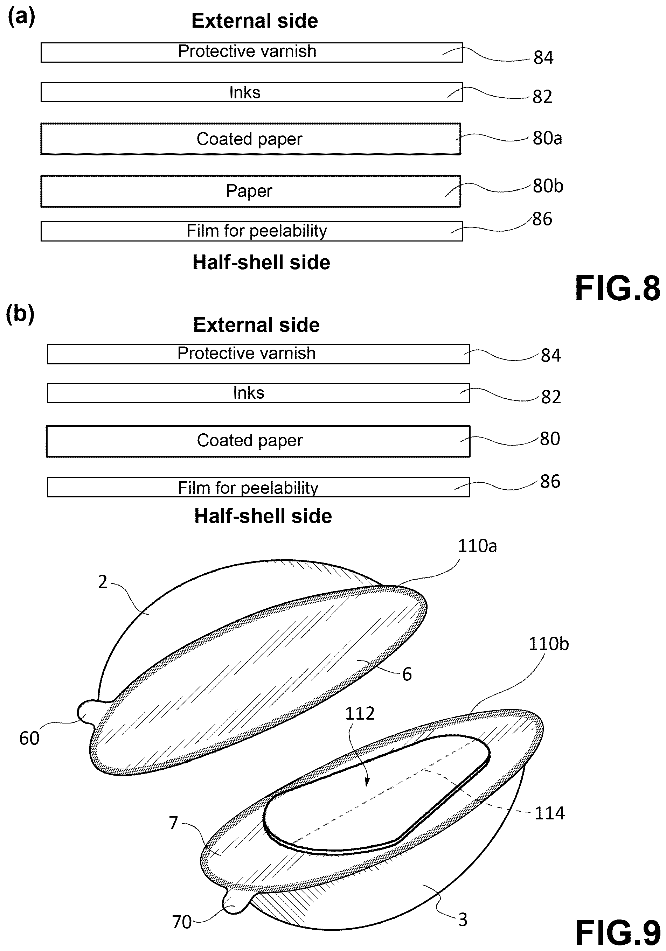

The sealing foil 7 can have the same layered structure, previously described for the foil 6. However, when the sealing foil 7 is joined to a half-shell that does not contain a food product, it does not require barrier characteristics; however, it also requires peelability characteristics for its detachment from the half-shell to which it is joined, and preferably ultrasonic weldability characteristics, to allow a take up or spreading tool (spatula) 112, made of paper material, to be attached to its outer surface by ultrasonic welding, as illustrated in Figure 9.

An example of a spreading tool that can be ultrasonically welded to the sealing foil is described in the Applicant's EP 3838796, together with its ultrasonic welding technology. The ultrasonic welding is carried out along a continuous or intermittent longitudinal axial line 114 of the tool, allowing the paper tool to adhere to the foil without the application of an adhesive.

The sealing foil 7 may consist of a laminate, the preferred layered structure of which is illustrated in Figures 5(a) and 5(b).

In the embodiment of Figure 5(a), the multilayer structure of the sealing foil comprises: a paper main layer 76, having characteristics corresponding to the paper layer 66 of Figure 3, and preferably a grammage of between 80 g/m² and 100 g/m²; a thin film 71 of plastic material, preferably of bioriented polypropylene, with a thickness of the order of 8 to 12 microns, for example 8 microns, laminated on the face of the paper layer 76 facing the other half-shell; the use of polypropylene for the film 71 is preferred both for the purpose of ultrasonic welding of the aforementioned paper material spreading tool on the outer face of the film, and for the purpose of the mutual connection of the two parts of the package, as described below.

The structure of Figure 5(a) also comprises a heat-sealable plastic material coating 79, such as a lacquer applied to the face of the paper layer 76 facing the inside of the half-shell, for example with a grammage of approximately 4 g/m².

The layer 79 can be obtained from any lacquer which, in addition to making the layer 79 heat-sealable, allows the foil to be peelable after the foil has been sealed to the flange of the respective half-shell.

The layer 79 is preferably obtained from a lacquer comprising polyolefins in a solvent (organic or aqueous), particularly a mixture of polyethylene and polypropylene, preferably with a prevalence of polypropylene, or comprising polyethylene vinyl acetate (EVA) in the aforementioned solvent.

In the embodiment of Figure 5(b), the multilayer structure comprises a paper layer 76, as previously described, a heat-sealable coating 78 formed by a polyolefin film, preferably polyethylene or high-density polyethylene with a thickness preferably from 6 to 12 microns, more preferably about 6 or 8 microns, applied by lamination on the face of the foil facing the half-shell to which it is joined and which allows a peelable connection to be obtained following the heat-sealing to the half-shell. The embodiment of Figure 5(b) also differs from that of Figure 5(a) in that the surface layer present on the face of the foil facing the other half-shell consists of a coating 72 (for example with a grammage of about 4 g/m²), obtained from an ultrasonically sealable lacquer and an underlying primer coating 74, having the characteristics previously described for Figure 3.

The half-shells 2 and 3 are both formed by a shaped sheet of paper material.

In particular, the half-shell which, in the example, is indicated with 2, intended to contain the food product, can be formed by a multilayer composite sheet comprising:
- at least one layer of paper 80, preferably two layers of paper 80a, 80b;
- a surface coating 86, present on the face of the half-shell facing the respective sealing foil, heat-sealable and/or ultrasonically-sealable, with barrier properties against moisture and/or oxygen or grease, and
- an outer protective coating layer 84, preferably applied on a layer formed by printing inks 82 in turn applied to one side of the paper layer.

In the multi-layer composite sheet used according to the invention, the paper component, whether it is formed by a single layer or by two or more layers, contributes at least 80% by weight, preferably at least 90% by weight and more preferably at least 95% by weight of the weight of the composite sheet.

In general and preferably, in the packaging according to the invention including the half-shells and respective sealing foil, the paper component contributes at least 80% by weight to the total weight of the packaging.

The multilayer composite sheet, used for forming the half-shell, has formability characteristics, the aforementioned oxygen and/or moisture or grease barrier properties, weldability characteristics, as well as the suitability to receive printing inks for obtaining an outer surface of the half-shell, with printed graphics.

The other half-shell may have similar characteristics, however, in the case where this half-shell 3 does not contain food products, but an accessory, it is not necessary to achieve barrier properties. The recyclability properties are achieved thanks to the prevalent presence of cellulosic fibers that make up the paper layer, which is the main layer, with greater grammage, in the sense previously indicated.

The sheet preferably has extensibility characteristics suitable for allowing it to be deep-drawn, in particular, an extensibility from 3% to 15%, determined according to the ISO 1924-3 standard.

Such half-shells can be obtained by a deep-drawing process, for example of the type described in WO 2023/119121 in the name of the Applicant. This process makes it possible to obtain an annular surface of the flanges 2' and 3', with a controlled and limited presence of wrinkles, thus allowing a hermetic sealing of the respective sealing foil.

By way of non-limiting example, the paper layer may consist of a thermoformable sheet, commercially available as Fibreform^{®}, optionally coated.

As indicated in the preamble of this description, the invention not only solves the problem of providing a totally recyclable package, but also the problem of the deformation of printed patterns present on the outer surface of the half-shells that occurs following the thermoforming of a conventional sheet or leaf of non-biodegradable plastic material or even of sheets of plastic material formed by a biodegradable polymer.

It has been found, and this constitutes a significant advantage provided by the invention, that the forming of the paper half-shells with the use of a sheet with an outer coating with a printed pattern substantially reduces the deformation of the pattern compared to the deformation caused by the thermoforming of a sheet of plastic material correspondingly printed. This result is particularly relevant when the printed pattern is a graphic identification code, such as a barcode or a QR code which, in the preferred ovoid configuration of the package according to the invention, are necessarily adopted and present on a surface with high curvature.

In particular, the printing of texts and/or particular graphic parts (e.g. barcode or QR code) undergoes a deformation by stretching the material no more than 15% in the two directions of the machine direction and transverse direction, (in practice the X and Y axes), the remaining part of the material being subject to drawing being fed by the sliding of the paper sheet, in accordance with the drawing technology described in WO 2023/119121 wherein the drawing of the sheet is carried out by constraining in a slidable manner the sheet to the support surface that surrounds the mold cavity, in such a way that the introduction of the drawing punch into the mold initially allows the sheet to slide inside the mold cavity and then the deformation by stretching the sheet.

On the other hand, the thermoforming of plastic material leads to a deformation of texts and/or particular graphic parts to which only the stretching of the material contributes, of an entity in the machine direction (X axis) and transverse direction (Y axis) directly linked only to the drawing ratio (cap area/starting area of the material laid out), without sliding of the material itself.

Figure 8 illustrates exemplary multilayer structures of the sheet, intended to be shaped to form the half-shells. Such structures comprise at least one main paper layer 80, i.e. two or more paper layers, for example 80a and 80b (Figure 8(a)).

In the case of the use of a single paper layer, the grammage is typically from 115 to 200, for example about 165 g/m².

In the case of the use of two or more paper layers, the total grammage of these layers is from 200 to 400, for example a first layer of 150 g/m² and a second layer of 165 g/m².

Preferably, at least one or both of the paper layers are coated paper.

The multilayer structure also comprises a surface layer 86, applied on the surface of the half-shell, facing the respective sealing foil; this layer can, for example, be formed by a polyolefin film, preferably of polyethylene, with high or medium density, applied by lamination, with a thickness from 10 to 60 microns. In particular, in the case of the half-shell 2, to which the structure shown in Figure 8(a) refers, the aforementioned surface film is preferably made of high-density polyethylene, preferably with a thickness of about 40 microns.

In the case of the half-shell 3, to which the structure of Figure 8(b) is preferably applied, the surface layer 86 is preferably formed by a medium density polyethylene film, preferably with a thickness of about 14 microns.

After the sheet is formed into a half-shell shape, with a radial flange, the presence of the aforementioned film 86 on the flange allows for a hermetic but peelable seal to the sealing foil. Furthermore, the presence of this film in the concave part of the half-shell results in barrier properties against moisture and/or oxygen or grease.

An additional coating layer with grease barrier properties (not shown), preferably obtained from an aqueous dispersion of acid-modified polyolefins, may optionally be present between the paper layer 80 and/or 80b and the surface layer 86.

The multilayer structure also comprises a coating 82, formed by printing inks, typically for rotogravure printing, which is deposited on the face, preferably coated, of the paper layer 80a or 80, typically with a grammage of about 2 g/m². The ink coating 82, which forms a continuous printed pattern or on surface portions, is preferably covered by a coating 84 formed by a protective varnish. The protective varnish can be any commercial varnish, comprising a mixture of resins and solvent, provided that it is applied with a final grammage that does not affect the eco-sustainability characteristics of the packaging, for example with a grammage of 3 g/m². By way of example, the protective varnish can be a polyester-based varnish (preferably PET), optionally including slip agents.

In a preferred embodiment, at least one of the two half-shells, in particular the half-shell intended to contain or containing the food product, has a transparent coating on its outer surface with moisture barrier properties, which is applied by spraying after the formation of the multi-layer sheet already initially equipped with the coating with printing inks 82.

The aforementioned transparent coating can be sprayed directly onto the ink coating 82 or onto the protective varnish coating 84.

In one embodiment, the transparent coating is obtained by spraying, after forming, an aqueous or hydroalcoholic solution or suspension containing colloidal silica and/or an alkoxysilane, such as tetraalkoxysilane and/or alkyltrialkoxysilane.

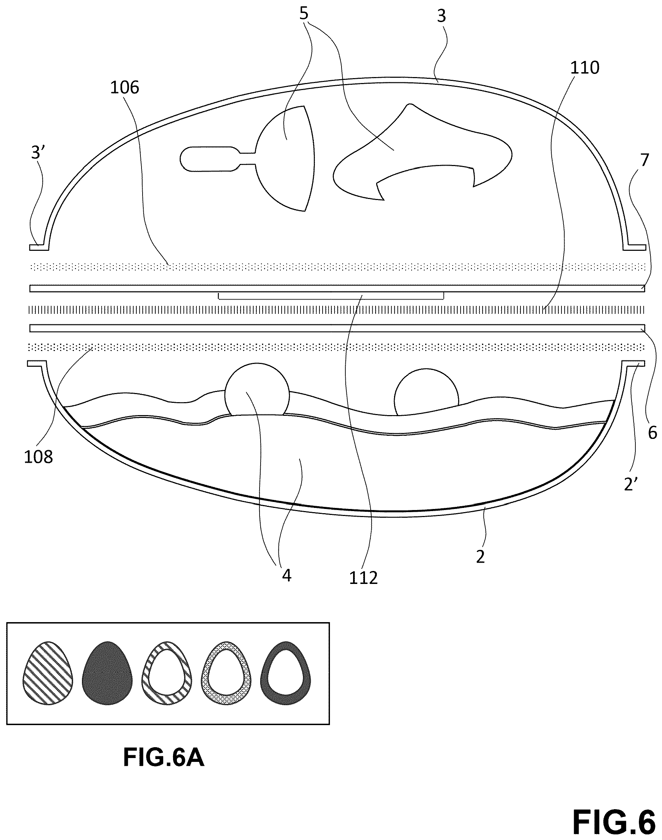

Figure 6 illustrates, in section, the exploded structure of the package, formed by the two half-shells 2 and 3 and the respective sealing foils 6 and 7.

As already indicated, the sealing foil 6 can have one of the structures indicated in Figure 3; the distribution pattern of the ultrasonic weldable surface lacquer, indicated by way of example in Figure 6A, can allow different sealing scenarios of the weld 108, whether thermal or ultrasonic, along the annular region of the flange 2', also expanding the evaluation parameters of the recyclability of the material. In Figure 6A, the regions with the highest gray intensity indicate the regions wherein the lacquer is applied on the surface of the sealing foil.

The sealing foil 7 preferably has a multilayer structure as indicated in Figure 5.

In the case of using a structure such as that illustrated in Figure 5(a), the welding between the foil and the respective half-shell, schematically indicated with 106 in Figure 6, can be purely thermal or ultrasonic.

The two parts of the package are fixed to each other by means of a weld made along the annular peripheral region of the respective sealing foils, indicated schematically and overall with 110 in Figure 6 and with 110a and 110b in Figure 9; this welding is preferably by ultrasonic welding.

Ultrasonic welding along annular regions can be carried out by means of a sonotrode, having an annular contact surface, as described in EP 919488. Preferably, still in accordance with the solution described in EP 919488, in the case in which the half-shells have respective appendicular formations 20 and 30 and the sealing foils also have appendicular formations 60 and 70 that can be superimposed on the appendicular formations of the half-shells; the two half-shells are connected to each other by welding the respective sealing foils, along the annular regions of these foils 110a and 110b, superimposed on the flanges of the half-shells, with the exclusion of welding at said appendicular formations.

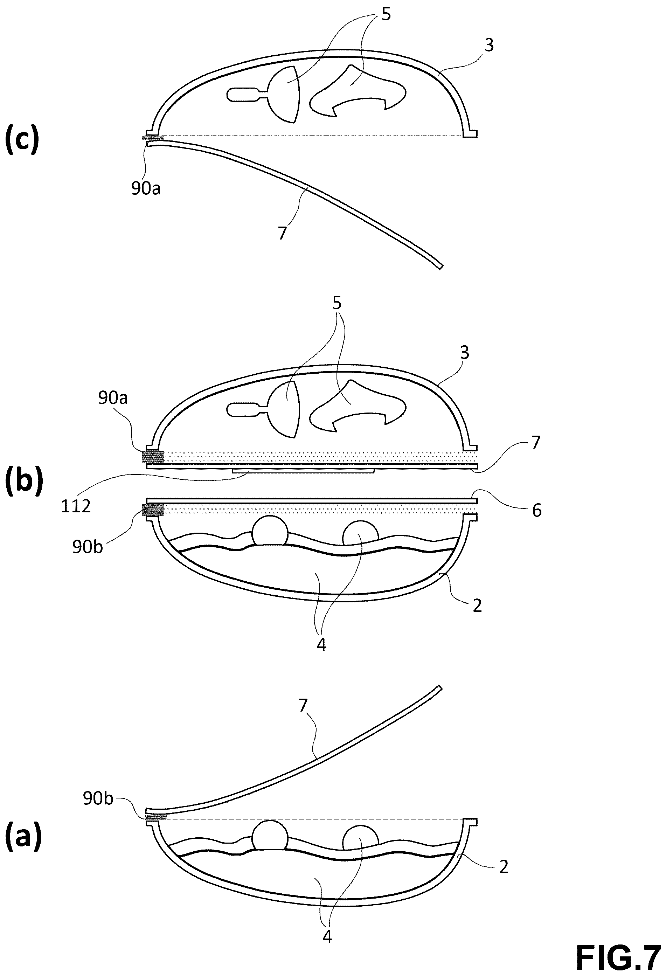

In one embodiment of the invention, illustrated in Figure 7 (a), (b) and (c), the sealing foil 6 and/or 7 of the first and/or second half-shell is connected to the flange of the respective half-shell with a seal whose adhesion strength to this flange, in a first portion of the flange surface, which is generally on the opposite side with respect to the appendicular formation, if adopted, is greater than the adhesion strength to the remaining portion of the flange surface, in such a way that the minimum force, exerted to allow the detachment of the foil from said remaining portion, does not generate the detachment of the foil from said first portion.

This solution ensures that when the consumer opens the package to consume the food product or to extract the accessory, the sealing foil generally remains connected to a portion of the flange surface, thus allowing compliance with the recyclability guidelines of the package, which can be disposed of in the recyclable material collection in a single disposal, avoiding the dispersion of the sealing foils in the environment.

The sealing area with greater adhesion strength is indicated in Figure 7 with the reference numbers 90a and 90b. In one embodiment, the greater adhesion force can be obtained by means of a greater transmission of heat applied in the context of thermal welding, to the surface region 90a or 90b.

In one embodiment of this solution, a welding tool is used that has an annular welding surface with a plurality of contiguous zones with digital heating, the heating of which is individually controllable. This solution makes it possible to heat at different sealing temperatures along the contour of the foil, particularly a higher sealing temperature, capable of generating an increased adhesion force, which makes it possible to avoid the detachment of the sealing foil in certain regions (typically the cusp region of the ovoid contour) and at the same time a lower sealing temperature in the remaining regions, which generates an adhesion force capable of allowing the foil to be peeled off.

Alternatively, the greater adhesion strength of the sealing foil to certain regions of the half-shell flange, such as to avoid the detachment of the foil in these regions, can be obtained by modifying an ultrasonic welding area, intervening on the application profile of the ultrasonic weldable lacquer.

Alternatively, the adhesion strength of the sealing foil to certain regions of the half-shell flange can be differentiated, so as to avoid the detachment of the foil in these predetermined regions, by intervening on the geometric construction characteristics of the welding tool, for example by making a tool with a heating surface with differentiated flatness.

The procedure for producing the package includes:
- the forming of the half-shells, preferably by drawing multi-layer paper sheets, in their previously described embodiments;
- filling the half-shells by introducing the substance or food product and/or the toy into their cavity,
- sealing the half-shells filled with the respective sealing foils, according to the methods described above (thermal or ultrasonic welding of the foil along the annular flange of the half-shells), and
- the connection of the half-shells to each other along the annular peripheral regions of the sealing foils.

Preferably, in order to obtain a package with shape stability, before the filling and sealing operation, the deep-drawn or otherwise shaped half-shells are subjected to a post-deep-drawing operation (or "coining", "curing") in the same mold or in a mold similar to that used for the deep-drawing that allows a post-recovery of the shape of the shaped half-shell; the post-deep-drawing operation is preferably carried out in the same mold or in a mold similar to that used for the deep-drawing, comprising a female mold and a punch having the same configuration as the deep-drawing mold, with a pressure element suitable for constraining the flange of the half-shell to the surface of the female mold that surrounds its cavity and applying heat and pressure so as to restore the initial shape and stabilize it.

This additional operation avoids the elastic return of the deep-drawn multi-layer sheet and facilitates the sealing operation with the sealing foils, allowing better sealing in register. Furthermore, the post-deep drawing operation improves the adhesion of the sealing foil to the annular flange of the half-shells, smoothing out any wrinkles on the annular flanges resulting from the deep drawing operation of the multi-layer paper sheet.

This additional operation, carried out before or immediately before or at the same time as the filling, is therefore particularly advantageous and desirable when the deep-drawn sheets are stored for a period of time before the filling operation, or when the deep-drawing, filling and sealing operations are not carried out in a continuous line.

As already indicated, the production process also preferably includes the operation of spray application of a transparent coating with moisture barrier properties, as previously described, on the outer surface of the multi-layer sheet already shaped or deep-drawn; this spray application operation can be carried out following the forming or deep-drawing operation or, following the aforementioned optional post-deep-drawing operation and before filling.

## Claims

1. Packaging for products, such as food products, comprising a first (2) and a second (3) half-shell shaped like a cap with a respective flange (2, 3) surrounding the mouth profile and connected to each other at the respective flanges, at least one of said half-shells being closed by a respective sealing foil (6, 7); said first (2) and second (3) half-shell and said respective sealing foil (6, 7) being optionally provided with respective appendicular formations (20, 30) for opening the package located at said flanges, **characterized in that**:
- said first (2) and second (3) half-shells are both formed by a shaped sheet of paper material,
- the aforementioned at least one sealing foil (6, 7) consists of a laminate comprising at least one paper main layer (66; 66a; 76), a heat-sealable surface coating (68; 78; 79) applied on the face of the foil facing the respective half-shell, and a heat-sealable or ultrasonic weldable surface coating (62; 71), applied on the face of the foil facing the other half-shell.

2. Packaging according to claim 1, **characterized in that** said surface coating (68; 78) applied on the face of the foil facing the respective half-shell comprises a laminated film of polyethylene or high density polyethylene.

3. Packaging according to claim 1, **characterized in that** said surface coating (79) applied on the face of the foil facing the respective half-shell is obtained by applying a heat-sealable lacquer.

4. Packaging according to claims 1 or 2, **characterized in that** said surface coating (62) present on the face of the sealing foil facing the other half-shell, is obtained by applying an ultrasonic weldable lacquer comprising a mixture of ethylene vinyl acetate and a solvent or water.

5. Packaging according to claim 4, **characterized in that** said sealing foil comprises a layer of primer (64), comprising natural biological substances, in particular a mixture of water and polysaccharides, interposed between said lacquer coating (62) that can be ultrasonically welded and said at least one paper main layer (66).

6. Packaging according to claim 3, **characterized in that** said surface coating (71) present on the face of the sealing foil facing the other half-shell is formed by a polypropylene film applied by lamination.

7. Packaging according to any one of claims 1 to 6, **characterized in that** the shaped sheet forming said half-shells is a multi-layer composite extensible sheet comprising:
- at least one layer of paper (80; 80a, 80b) and
- a surface coating (86), present on the face of the half-shell facing the respective sealing foil, which is heat-sealable and/or ultrasonic-sealable and having barrier properties to moisture and/or oxygen or grease.

8. Packaging according to claim 7, **characterized in that** said surface coating (86), present on the face of the half-shell facing the respective sealing foil, which is heat-sealable and/or ultrasonic-sealable, is a film, applied by lamination, of high or medium density polyethylene.

9. Packaging according to any one of claims 1 to 8, **characterized in that** the shaped sheet forming said half-shells is an extensible sheet with an extensibility (determined according to ISO 1924-3 standard) from 3% to 15%.

10. Packaging according to one of claims 1 to 9, **characterized in that** the sheet of paper material, forming at least one of said half-shells, further comprises a layer comprising printing inks (82), applied to one face of the paper layer (80; 80a, 80b) and a surface protective coating layer (84) applied to cover the printing ink layer (82).

11. Packaging according to claim 1, **characterized in that** each of said half-shells (2, 3) is associated with a respective sealing foil (6,7) and in which one (2) of said first or second half-shell comprises a food substance (4) and is formed by a multilayer composite extensible sheet comprising:
- at least one layer of paper (80), preferably two layers of paper (80a, 80b),
- a surface coating (86) applied by lamination on the face of the half-shell facing the respective sealing foil, heat-sealable and/or ultrasonic-sealable, having barrier properties to moisture and/or oxygen or grease, preferably formed by a high or medium density polyethylene film,
- at least one layer comprising printing inks (82) applied to the paper layer (80, 80a), and
- a layer of protective surface coating (84) applied to cover the layer of printing inks (82),
and wherein the respective sealing foil comprises at least one main paper layer (66, 66a), a surface coating of heat-sealable or ultrasonic-sealable plastic material (68) formed by a polyethylene or high-density polyethylene film, applied to the face of the foil facing the half-shell to which it is associated, an optional coating layer (70b, 70c), formed by a polypropylene film applied by lamination, with moisture and/or oxygen barrier properties, optionally metallized, interposed between the main paper layer (66) and the surface coating (68), a surface coating (62) present on the face of the sealing foil facing the other half-shell formed by an ultrasonic-sealable lacquer and a primer layer (64) based on natural biological substances, interposed between said lacquer coating (62) and said at least one main paper layer (66, 66a; 76).

12. Packaging according to claim 11, **characterized in that** the other (3) of said first and second half-shell contains a toy (5) or a non-food product and is formed by a multilayer composite stretchable sheet comprising:
- at least one layer of paper (80), a surface coating (86) applied by lamination on the face of the half-shell facing the respective sealing foil, heat-sealable and/or ultrasonically weldable, having barrier properties to moisture and/or oxygen or grease, preferably formed by a high or medium density polyethylene film,
- at least one layer comprising printing inks (82) applied to the paper layer (80, 80a), and
- a surface protective coating layer (84) applied to cover the printing ink layer (82), and wherein the respective sealing foil (7) comprises:
- a main paper layer (76),
- a heat-sealable or ultrasonic-sealable surface coating (78, 79) applied to the face of the foil facing the half-shell to which it is joined, selected from a polyethylene or high-density polyethylene film applied by lamination or a layer obtained by applying a heat-sealable lacquer and
- a surface coating (71, 72) on the side of the sealing foil facing the other half-shell, selected from a layer (72) formed by an ultrasonic weldable lacquer obtained from a mixture comprising ethylene vinyl acetate and a solvent or water and a polypropylene film applied by lamination (71).

13. Packaging according to claim 12, **characterized in that** the surface coating (72) present on the face of the sealing foil facing the other half-shell, is formed by an ultrasonic weldable lacquer obtained from a mixture comprising ethylene vinyl acetate and a solvent or water, said sealing foil further comprising a layer of primer (74), comprising natural biological substances, in particular a mixture of water and polysaccharides, interposed between said lacquer coating (72) that can be welded by ultrasounds and said at least one main paper layer (76) and in which the surface coating (78) of heat-sealable plastic material applied to the face of the foil facing the half-shell to which it is associated, is a film of polyethylene or high density polyethylene applied by lamination.

14. Packaging according to one of claims 1 to 10, **characterized in that** said first (2) and second (3) half-shell are each provided with a respective sealing foil (6, 7) and wherein the flanges (2', 3') of said first and second half-shell and the respective sealing foils have appendicular formations (20, 30; 60, 70) for opening the packaging, the appendicular formations (60, 70) of each sealing foil (6, 7) being superimposed or superimposable on the appendicular formations (20, 30) of the respective half-shell, each sealing foil being connected by thermal or ultrasonic welding to the annular flange of the respective half-shell also in correspondence with said appendicular formations.

15. Packaging according to any one of the preceding claims, **characterized in that** said first (2) and second (3) half-shells are connected to each other by welding the respective sealing foils (6, 7) along annular regions (110a, 110b) of said foils superimposed on the flanges (2', 3') of said half-shells, with the exception of the welding at said appendicular formations.

16. Packaging according to any one of claims 1 to 15, **characterized in that** the sealing foil (6, 7) of the first and/or second half-shell is connected to the flange (2', 3') of the respective half-shell with a weld whose adhesion force to said flange, in a first portion (90a, 90b) of the surface of said flange, preferably opposite to the appendicular formation when present, is greater than the adhesion force to the remaining portion of the flange surface, in such a way that the minimum force, exerted to allow the detachment of the foil from said remaining portion, does not generate the detachment of the foil from said first portion.

17. Packaging according to any one of claims 1 to 16, wherein one of the two half-shells is provided with a respective sealing foil, **characterized in that** it comprises a flattened take up or spreading tool (112) of paper material interposed between said sealing foils and ultrasonically welded to one of said foils.

18. Packaging according to any one of claims 1 to 17, in which at least one of the half-shells comprises a transparent coating with moisture barrier properties, applied by spraying on the outer surface of the already drawn half-shell.

19. Process for the production of a package according to any one of claims 1 to 18, comprising the operations of:
- forming the half-shells, by drawing the paper sheets;
- filling the half-shells with the introduction of the food product and/or a play object into their cavity,
- sealing the half-shells filled with the respective sealing foils, and
- connecting the half-shells to each other along the annular peripheral regions of the sealing foils,
**characterized in that** it includes an operation of
- post-deep drawing of the deep-drawn half-shells carried out before the half-shell filling operation.

20. Procedure according to claim 19, comprising the operation of spray application of a transparent coating with moisture barrier properties, on the external surface of the already drawn half-shell, carried out following the drawing operation or, following the aforementioned post-drawing operation and before filling.
